# EUROPÄISCHE PATENTANMELDUNG

(11) **EP 1 504 931 A2**
(43) Veröffentlichungstag der Anmeldung: **09.02.2005**
(21) Anmeldenummer: 03019941.8
(22) Anmeldetag: 02.09.2003
(51) Int. Cl.: B60H 1/00

(54) **Mobiler Kühl- und Wärmebehälter**

(30) Priorität: 05.08.2003 DE 20312297 U
(71) Anmelder: Stehr, Jürgen, 36318 Schwalmtal (DE)
(72) Erfinder: Stehr, Jürgen, 36318 Schwalmtal (DE)
(74) Vertreter: Knefel, Cordula, Dipl.-Phys.

(57) **Zusammenfassung**

Die Erfindung betrifft einen mobilen Kühl- und Wärmebehälter, insbesondere für Fahrzeuge, wobei der Kühl- und Wärmebehälter als ein von der gekühlten Luft einer im Fahrzeug vorhandenen Klimaanlage gekühlter Kühl- und Wärmebehälter ausgebildet ist.

## Beschreibung

Die Erfindung betrifft einen mobilen Kühl- und Wärmebehälter, insbesondere für Fahrzeuge.

Gemäß dem Stand der Technik sind mobile Kühlbehälter bekannt, die mit Kühlakkus bestückt werden. Diese zum Stand der Technik gehörenden Kühlbehälter haben den Nachteil, dass die Kühlakkus im Laufe der Zeit ihre Kühltemperatur verlieren und das zu kühlende Gut in dem Kühlbehälter nicht mehr kühlen. Insbesondere, wenn die Umgebungstemperatur sehr hoch ist oder relativ warme Gegenstände in den Kühlbehälter gegeben werden, um diese herunterzukühlen, reicht die Leistung der Kühlakkus nicht aus.

Weiterhin gehören zum Stand der Technik Kühlbehälter, die einen elektrischen Lüfter aufweisen. Diese Kühlbehälter werden in Fahrzeugen, beispielsweise an den Zigarettenanzünder angeschlossen. Diese Kühlbehälter werden meistens über eine elektrische Leistung von 12 oder 24 Volt gekühlt. Auch diese zum Stand der Technik gehörenden Kühlbehälter haben den Nachteil, dass diese Kühlbehälter nicht in der Lage sind, das zu kühlende Gut vernünftig herunterzukühlen. Die Leistung dieser Kühlbehälter reicht meistens nicht aus oder es dauert extrem lange, diese Materialien abzukühlen. Weiterer Nachteil dieser zum Stand der Technik gehörenden Kühlbehälter ist, dass die beim Kühlvorgang entstehende warme Luft wieder in das Fahrzeuginnere geblasen wird. Bei längerem Stillstand des Fahrzeuges kann ebenfalls nicht gekühlt werden, da sich die Fahrzeugbatterie über den enormen Stromverbrauch entladen würde. Eine Kühlung wird darüber hinaus lediglich bis 20° C Unterschied von dem Inneren der Kühlbox zu der Umgebungstemperatur erreicht.

Das der Erfindung zurunde liegende technische Problem besteht darin, einen mobilen Kühl- und Wärmebehälter anzugeben, der eine sehr hohe Kühlleistung aufweist, der mit den im Kraftfahrzeug vorhandenen Mitteln kühlbar ist, und der darüber hinaus preiswert in der Herstellung ist. Darüber hinaus sollen in dem Behälter auch Gegenstände warmgehalten oder erwärmt werden.

Dieses technische Problem wird durch einen Kühl- und Wärmebehälter mit den Merkmalen gemäß Anspruch 1 gelöst.

Dadurch, dass der erfindungsgemäße Kühl- und Wärmebehälter als ein von der gekühlten Luft einer im Fahrzeug ohnehin vorhandenen Klimaanlage gekühlter Kühl- und Wärmebehälter ausgebildet ist, kann die Kühlleistung der Klimaanlage des Fahrzeuges zum Kühlen des Innenraumes des Behälters genutzt werden.

Mit dem erfindungsgemäßen Kühl- und Wärmebehälter ist es auch möglich, Gegenstände zu erwärmen oder warm zu halten, indem die Heizleistung der in dem Fahrzeug vorhandenen Heizung ausgenutzt wird. Anstelle der Klimaanlage wird dann die Heizung eingeschaltet.

Die folgenden Ausführungen beziehen sich der Einfachheit halber nur noch auf das Kühlen von Gegenständen. Sie treffen jedoch gleichermaßen auch für das Erwärmen und das Warmhalten von Gegenständen in dem Kühl- und Wärmebehälter zu.

Mit dem erfindungsgemäßen Kühl- und Wärmebehälter ist es möglich, in kürzester Zeit die zu kühlenden Gegenstände herunterzukühlen und kühl zu halten. Darüber hinaus entsteht beim Kühlvorgang keine warme Luft, die in das Fahrzeuginnere abgegeben wird.

Der erfindungsgemäße Kühl- und Wärmebehälter ist als ein von der gekühlten Luft durchströmter Kühl- und Wärmebehälter ausgebildet. Die Luftzuführleitung kann an einer beliebigen Stelle des Kühl- und Wärmebehälters angeordnet sein. Dadurch, dass warme Luft immer aufsteigt und kalte Luft immer absinkt, werden die zu kühlenden Gegenstände immer ausreichend gekühlt.

Vorteilhaft wird die wenigstens eine Luftzuführleitung mit einer Austrittsöffnung der Lüftungsanlage verbunden. Gemäß einer bevorzugten Ausführungsform ist hierfür ein Adapter vorgesehen, der an der Austrittsöffnung angeordnet wird.

Der Adapter ist derart ausgebildet, dass er an den Austrittsöffnungen der Lüftungsanlage, die üblicherweise Schlitze aufweist, unabhängig vom Fahrzeugtyp befestigbar ist.

Die Luftzuführleitung ist vorteilhaft als flexibler Schlauch ausgebildet, um den Kühl- und Wärmebehälter an jedem beliebigen Platz des Fahrzeuges anzuordnen.

Die Luftzuführleitung kann gemäß einer weiteren bevorzugten Ausführungsform mittels eines weiteren Adapters an dem Kühl- und Wärmebehälter befestigt sein. Es ist auch möglich, den Luftzuführschlauch lediglich durch eine Öffnung, beispielsweise durch Öffnen eines Teiles des Reißverschlusses in den Kühl- und Wärmebehälter zu führen.

Gemäß einer weiteren Ausführungsform ist es möglich, die Luftzuführleitung an einem separaten Lüftungskanal in dem Fahrzeug zu befestigen. Hierfür werden vorteilhaft Lüftungskanäle im Fahrzeug vorgesehen, beispielsweise im Fußraum des Beifahrers oder im Fußraum des Rückbankbereiches, so dass eine bequeme Zuführung der Warm- oder Kaltluft durch die Luftzuführleitung möglich ist und die üblichen Lüftungsaustrittsöffnungen nicht durch den Adapter verschlossen sind.

Gemäß einer besonders bevorzugten Ausführungsform ist der Adapter als Klammer ausgebildet mit hakenförmigen Enden. Hierdurch ist es möglich, den Adapter mittels Spannung in den Lüftungsschlitzen zu verankern, so dass er unabhängig von sämtlichen Fahrzeugtypen in den Lüftungsschlitzen angeordnet werden kann.

Vorteilhaft weist der Adapter eine Schraube oder einen Stift auf, an dem die Luftzuführleitung befestigbar ist. Hierzu weist die Luftzuführleitung vorteilhaft ein starr ausgebildetes Ende, beispielsweise ein Formstück auf, durch das die Schraube oder der Stift greift. Das Ende wird beispielsweise mittels einer Rändelmutter an der Schraube befestigt.

Der aus dem Adapter vorstehende Teil des Stiftes oder der Schraube ist vorteilhaft längenverstellbar ausgebildet, um ein Überstehen des Stiftes oder der Schraube über dem starren Ende der Luftzuführleitung zu verhindern. Hierdurch wird eine Verletzungsgefahr, beispielsweise im Falle eines Unfalles durch überstehende Teile verhindert.

Um eine optimale Zuführung der Luft aus der Austrittsöffnung in die Luftzuführleitung zu erreichen, ist vorteilhaft eine Abdeckung für den von der Luftzuführleitung nicht abgedeckten Teil der Austrittsöffnung vorgesehen.

Weitere Merkmale und Vorteile der Erfindung ergeben sich anhand der zugehörigen Zeichnung, in der ein Ausführungsbeispiel eines erfindungsgemäßen mobilen Kühl- und Wärmebehälters nur beispielhaft dargestellt ist. In der Zeichnung zeigen:
- Fig. 1: eine mobile Kühlbox, die an der Klimaanlage eines Fahrzeuges angeschlossen ist;
- Fig. 2: einen Adapter im Längsschnitt.

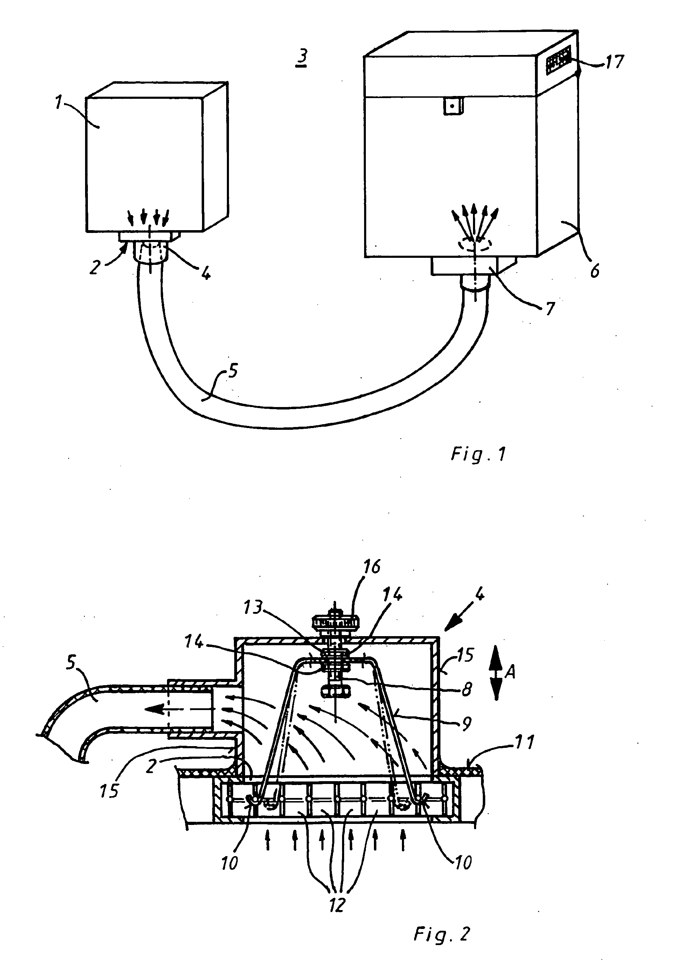

Fig. 1 zeigt einen mobilen Kühl- und Wärmebehälter (6), der an einer Autoklimaanlage (1) oder -heizung angeschlossen ist. Die gekühlte Luft der Autoklimaanlage (1) wird ausgenutzt, um Speisen und Getränke in der Fahrzeugkabine (nicht dargestellt) zu kühlen, oder die erwärmte Luft der Autoheizung wird ausgenutzt, um Speisen und Getränke, beispielsweise Babynahrung zu erwärmen. Die folgenden Ausführungen beziehen sich lediglich auf eine Autoklimaanlage. Die Ausführungen gelten jedoch gleichermaßen für eine Heizung. Für die Kühlung wird an einer bestehenden Austrittsöffnung (2) des Umluftgebläses der Autoklimaanlage (1) im Innenraum (3) des Fahrzeuges ein Adapter (4) angeordnet. An dem Adapter (4) wird ein flexibler Schlauch (5) in einfacher Art und Weise angebracht, wie dies in Fig. 2 noch weiter erläutert wird. Der Schlauch (5) wird über einen ebenfalls schnell lösbaren Adapter (7) mit dem Kühlund Wärmebehälter (6), der als Kühlbox oder Kühltasche ausgebildet sein kann, verbunden. Die Kühl- und Wärmebehälter oder Kühlboxen sind so gestaltet, dass eine Luftzirkulation in ihnen möglich ist. Die kalte oder warme Luft wird durch den Schlauch (5) und den Adapter (7) in den Kühl- und Wärmebehälter (6) eingeleitet. Durch Austrittsöffnungen (17) oder durch einen Reißverschluss des Kühl- und Wärmebehälters (6) oder durch beispielsweise Nylongewebe des Kühl- und Wärmebehälters (6) tritt die Luft wieder aus. Durch das einfache Anschließen des Kühl- und Wärmebehälters (6) an die Autoklimaanlage (1) oder -heizung ist es möglich, Behälter und Taschen als Einkaufsbehälter zu nutzen, die beim Transport im Auto gekühlt werden.

Die gekühlte Luft der Autoklimaanlage (1) durchströmt den Behälter (6). Hierdurch werden Speisen, Getränke und andere Sachen schnellstens gekühlt. Durch die Länge des flexiblen Schlauches (5) kann der Aufbewahrungsort im Fahrzeug frei gewählt werden. Der Kühl- und Wärmebehälter (6) kann somit in der Kabine oder im Kofferraum aufbewahrt werden.

Fig. 2 zeigt den Adapter (4) mit einer Klammer (9), die abgewinkelte Enden (10) aufweist. Die Klammer (9) ist einmal (durchgezogene Linien) im gespannten Zustand dargestellt sowie strichpunktiert im zusammengedrückten Zustand, in dem die Klammer in den Lüftungsschlitzen (12) eingesetzt wird.

Die abgewinkelten Enden (10) greifen in Lüftungsschlitze (12) einer Austrittsöffnung (2) der Autoklimaanlage (1). In der Klammer (9) ist eine Bohrung (13) angeordnet, durch die eine Schraube (8) greift. Die Schraube (8) ist mittels Muttern (14) an der Klammer (9) höhenverstellbar befestigt. Ein Formstück (15) des flexiblen Schlauches (5) ist mit einer Rändelmutter (16) an der Schraube (8) befestigt. Die Höhenverstellung der Schraube (8) in Richtung des Pfeiles A dient dazu, dass die Rändelmutter (16) nicht über dem Formstück (15) des flexiblen Schlauches (5) übersteht, so dass keine Verletzungsgefahr gegeben ist.

Eine Abdeckung (11) verhindert ein Austreten von gekühlter Luft aus der Austrittsöffnung (2) in dem Bereich, der von dem Formteil (15) nicht überdeckt wird. Die Abdeckung ist formschlüssig mit dem Formteil (15) verbunden.

Durch die Federwirkung und die Einstellschraube (8) ist ein Anpassen des Adapters (4) an sämtliche Größen und Formen von Luftaustrittsöffnungen (2) sowie eine vertikale oder horizontale Ausrichtung möglich.

Der flexible Schlauch (5) ist in dem Formteil (15) angeordnet, beispielweise eingesteckt.

Die Luft zirkuliert in dem Kühl- und Wärmebehälter (6). Sie wird mittels des Schlauches (5) eingeleitet und tritt durch Austrittsöffnungen, durch das Material des Kühl- und Wärmebehälters (6.), wie beispielsweise Nylon oder dergleichen, und/oder durch verschlussbedingte Öffnungen, wie Reißverschlüsse wieder aus.

### Bezugszahlen

- 1: Klimaanlage
- 2: Austrittsöffnung
- 3: Fahrzeuginnenraum
- 4: Adapter
- 5: flexibler Schlauch
- 6: Kühl- und Wärmebehälter
- 7: Adapter am Kühl- und Wärmebehälter
- 8: Schraube
- 9: Klammer
- 10: abgewinkelte Enden
- 11: Abdeckung
- 12: Lüftungsschlitze
- 13: Öffnung in Klammer
- 14: Muttern
- 15: Formstück des Schlauches (5)
- 16: Rändelmutter
- 17: Austrittsöffnung

## Patentansprüche

1. Mobiler Kühl- und Wärmebehälter,
**dadurch gekennzeichnet, dass** der Kühl- und Wärmebehälter (6) als ein von der gekühlten oder erwärmten Luft einer im Fahrzeug vorhandenen Klimaanlage (1) oder einer im Fahrzeug vorhandenen Heizung gekühlter oder erwärmter Kühl- und Wärmebehälter (6) ausgebildet ist.

2. Mobiler Kühl- und Wärmebehälter nach Anspruch 1,
**dadurch gekennzeichnet, dass** der Kühl- und Wärmebehälter (6) als ein von der gekühlten oder erwärmten Luft durchströmter Kühl- und Wärmebehälter (6) ausgebildet ist.

3. Mobiler Kühl- und Wärmebehälter, **dadurch gekennzeichnet, dass** der Kühl- und Wärmebehälter (6) wenigstens eine Luftzuführleitung (5) aufweist, und dass die Luftzuführleitung (5) mit einer Austrittsöffnung (2) der Lüftungsanlage (1) des Fahrzeuges verbunden ist.

4. Mobiler Kühl- und Wärmebehälter nach Anspruch 3,
**dadurch gekennzeichnet, dass** die Luftzuführleitung (5) mittels eines Adapters (4) an der Austrittsöffnung (2) angeordnet ist.

5. Mobiler Kühl- und Wärmebehälter nach Anspruch 3,
**dadurch gekennzeichnet, dass** die Luftzuführleitung (5) als flexibler Schlauch ausgebildet ist.

6. Mobiler Kühl- und Wärmebehälter nach Anspruch 3,
**dadurch gekennzeichnet, dass** die Luftzuführleitung (5) mittels eines Adapters (7) an dem Kühl- und Wärmebehälter (6) befestigt ist.

7. Mobiler Kühl- und Wärmebehälter nach Anspruch 1,
**dadurch gekennzeichnet, dass** die Luftzuführleitung (5) an einem separaten Lüftungskanal des Fahrzeuges befestigbar ist.

8. Mobiler Kühl- und Wärmebehälter nach Anspruch 4,
**dadurch gekennzeichnet, dass** der Adapter (4) eine Klammer (9) mit hakenförmigen Enden (10) aufweist.

9. Mobiler Kühl- und Wärmebehälter nach Anspruch 4,
**dadurch gekennzeichnet, dass** der Adapter (4) eine Schraube oder einen Stift (8) aufweist, an dem die Luftzuführleitung (5) befestigbar ist.

10. Mobiler Kühl- und Wärmebehälter nach Anspruch 9,
**dadurch gekennzeichnet, dass** die Schraube oder der Stift (8) in der Klammer (9) längenverstellbar angeordnet ist.

11. Mobiler Kühl- und Wärmebehälter nach einem der vorhergehenden Ansprüche, **dadurch gekennzeichnet, dass** eine Abdeckung (11) für den von der Luftzuführleitung (5) nicht abgedeckten Teil der Austrittsöffnung (2) vorgesehen ist.

12. Lüftungskanal, **dadurch gekennzeichnet, dass** der Lüftungskanal als ein separat im Fahrzeug angeordneter Lüftungskanal ausgebildet ist, und dass ein Kühl- und Wärmebehälter (6) nach einem der Ansprüche 1 bis 11 an den Lüftungskanal oder an wenigstens eine Austrittsöffnung des Lüftungskanals anschließbar ist.
